# EUROPEAN PATENT APPLICATION

(11) **EP 3 647 746 A1**
(43) Date of publication of application: **06.05.2020**
(21) Application number: 17916153.4
(22) Date of filing: 20.12.2017
(51) Int. Cl.: G01G 19/10

(54) **VEHICLE WEIGHT MEASUREMENT DEVICE**

(30) Priority: 26.06.2017 JP 2017124116
(71) Applicant: NSK Ltd., Tokyo 141-8560 (JP)
(72) Inventor: HIKIDA Masafumi, Fujisawa-shi Kanagawa 251-8501 (JP); MATSUDA Yasuyuki, Fujisawa-shi Kanagawa 251-8501 (JP); SUZUKI Eisaku, Fujisawa-shi Kanagawa 251-8501 (JP)
(74) Representative: Grünecker Patent- und Rechtsanwälte PartG mbB
(86) International application number: PCT/JP2017/045839
(87) International publication number: WO 2019/003471

(57) **Abstract**

The present invention includes: a bottom plate (200) that contacts an arm of a suspension device; a piston (300) that is capable of pressing a diaphragm (230), which forms an oil chamber (201), the piston being on the upper-surface side of the bottom plate; and a pressure sensor (400) that detects the pressure of a measurement fluid R in the oil chamber, the pressure sensor being on the lower-surface side of the bottom plate. The bottom plate has a mechanism for stopping the rotation of the arm of the suspension device in the vicinity of the pressure sensor. A hanging rim part (504a) is formed on a flange part (302) of the piston. A gap is formed between the flange part and the bottom plate. The bottom plate is provided with a step part (207) aligned with the hanging rim part. A stopper ring (320) provided so as to cover the step part from the hanging rim part is provided. A projecting part (300a) of the piston that fits with a notch part (322) of the stopper ring, and a projection part (205b) that fits with the notch part so as to be capable of moving in the longitudinal direction and projects from the upper-surface side, are also provided.

## Description

### Technical Field

The present invention relates to a vehicle weight measurement device, and particularly to, a vehicle weight measurement device to be incorporated to a suspension device of an automobile and configured to detect an overloading.

### Background Art

In an automobile, particularly, a commercial vehicle such as a truck and a van for transporting a variety of goods, an illegal overloaded vehicle which travels on a road with exceeding legal load capacity becomes a social issue. The reason for the overloading is that the transportation cost can be saved when carrying many goods at one time.

However, the overloading should be avoided because it can cause a variety of problems, as follows.
(1) The overloading may deteriorate motion performance of the automobile and damage constitutional components, which may cause an accident. That is, the overloading involves many causes of an accident. For example, an axle (hub) is broken, a tire is damaged (burst), a braking distance increases, a brake is overheated and poorly operates, and a vehicle is likely to overturn.
(2) The overloading causes severe damage to the road, and therefore, maintenance cost of the road increases.

There are several causes to make it difficult to prevent the overloading. One of them is that a driver, a passenger and the like cannot easily recognize the loaded weight.

That is, conventionally, a vehicle to be measured is placed on a platform scale so as to measure load of the vehicle (loaded weight measurement).

However, the installation of the platform scale requires a large facility and a large installation space, so that the installation cost increases. Therefore, the number of platform scales which can be installed is limited, so that it is physically difficult to measure many vehicles.

Accordingly, in recent years, a simple load measurement device configured to be mounted on a vehicle itself and to measure the load thereof has been suggested, as disclosed in Patent Document 1.

For example, the technique disclosed in Patent Document 1 is a simple load measurement device including: a base assembly of which two weld parts are welded to different mounting positions of a loaded member configured to expand and contract as vehicle load is applied thereto; a compression strain sensor element which is supported by the base assembly and of which an output changes as the load to be applied to the vehicle changes such that the base assembly expands and contracts in a direction in which the two weld parts come close to and separate from each other, and a circuit board mounted thereon an amplifier configured to amplify the output of the compression strain sensor element, wherein the load measurement device is configured to measure load by detecting the compression strain.

### Citation List

### Patent Document

Patent Document 1: JP-A-2001-330503

### Summary

### Problems To Be Solved

As a suspension device (suspension) for an automobile, various types of suspension devices are selectively used according to a purpose of use, for a front wheel or a rear wheel in a vehicle.

For example, in a small commercial vehicle, a McPherson strut type or a double wishbone type is often used as a suspension device for a front wheel. Further, a trailing arm type, a semi-trailing arm type, or a torsion beam type is often selected as a suspension device for a rear wheel.

In the suspension device for a rear wheel, in addition to a damping device (shock absorber), a single coil spring is interposed between an arm (suspension arm) of the suspension device and a lower surface of a vehicle body. In this case, a distance between the arm and the lower surface of the vehicle body is narrowed due to a load of the vehicle weight on the suspension device, so that the coil spring is slightly compressed. The coil spring is pressed and fixed between the arm and the lower surface of the vehicle body due to an extension force thereof.

Conventionally, it has been known to provide a sensor (a weight measurement device) between the coil spring and the arm of the suspension device for a rear wheel having the above configuration. The weight measurement device is mounted by being pressed against the arm by the extension force of the coil spring.

However, in a case where the weight measurement device is mounted as described above, the weight measurement device may be relatively rotated in a circumferential direction due to vibration caused in the use of the automobile, and a wire connected to the sensor may be cut (disconnected) due to a twist which is caused by the rotation of the weight measurement device and accumulated for a long-term use.

On the other hand, if the weight measurement device is fixed to the arm with a fixing member such as a screw, a relative rotation of the weight measurement device can be prevented. However, it takes time and labor for assembling the weight measurement device to a vehicle, and there are problems such as an increase in parts for the fixing member.

Accordingly, a weight measurement device is desired which includes a fixing member which enables the weight measurement device to be easily assembled to a vehicle without using fixing members such as a screw while preventing a relative rotation of a suspension device with respect to an arm.

Also, there has been conventionally known a weight measurement device in which a pressure sensor detects a change in pressure caused by a slight displacement in an axial direction of a member integrated with a piston which receives a load from a coil spring or the like with respect to a member (diaphragm or the like) integrated with a bottom plate provided in contact with the arm of the suspension device.

After being mounted on the vehicle, this weight measurement device is not disassembled as the extension force of the coil spring is loaded in the axial direction and pressed against the arm. However, before being mounted on the vehicle, the weight measurement device may be disassembled into a member integrated with the bottom plate and a member integrated with the piston, which would be inconvenient in transportation to an automobile assembly plant. Therefore, a weight measurement device is desired which is not disassembled even before being mounted on the vehicle.

Also, after the weight measurement device is mounted on the vehicle, the member integrated with the bottom plate and the member integrated with the piston may rotate relative to each other. The rotation may cause wear of a diaphragm (the member integrated with the bottom plate) and a member (for example, a pad) integrated with the piston in sliding contact with the diaphragm.

Further, the bottom plate is pressed against the arm, and the member integrated with the piston is pressed against the coil spring, resulting in the coil spring rotating with respect to the arm. The coil spring used in the vehicle may have a shape which is not axisymmetric due to requirements for displacement characteristics with respect to a load, and unexpected changes in displacement characteristics due to rotation may also deteriorate accurate load detection of the weight measurement device.

Such a problem may occur not only in a vehicle weight measurement device provided in the suspension device for a rear wheel but also in a vehicle weight measurement device provided in the suspension device for a front wheel. Hereinafter, as the bottom plate configuring the weight measurement device for a rear wheel and the top plate configuring the weight measurement device for a front wheel are each provided with a pressure sensor, they are collectively and commonly referred to as a sensor body. In the present specification, the bottom plate and the top plate are both referred to as the sensor body.

In view of the above-described circumstances, according to an aspect of the present invention, there is provided a weight measurement device including a fixing member which enables the weight measurement device to be easily assembled to a vehicle while preventing a relative rotation with respect to an arm of a suspension device.

According to another aspect of the present invention, there is provided a weight measurement device having a configuration which is not disassembled even without a load in an axial direction by a coil spring.

According to still another aspect of the present invention, there is provided a weight measurement device having a configuration which prevents a relative rotation between a member integrated with a sensor body and a member integrated with a piston such that the wear of a member integrated with the piston in sliding contact with a diaphragm is prevented.

### Means For Solving the Problems

A vehicle weight measurement device according to one embodiment of the present invention includes:
a sensor body having a groove portion of a predetermined shape and mounted to a vehicle body side or an arm side of a suspension device;
a moving body configured to be moved by a resilient force of a spring;
a diaphragm configured to be pressed and deformed by movement of the moving body;
an oil chamber configured by the groove portion of the sensor body and the diaphragm and filled with a predetermined measurement fluid, wherein an internal pressure of the oil chamber is changeable by pressing the diaphragm; and
a pressure sensor provided in the sensor body and configured to detect a change in pressure in the oil chamber,
wherein a relative-rotation preventing structure is provided on the sensor body and the moving body, so as to prevent a relative rotation between the sensor body and the moving body.

In the vehicle weight measurement device, a stopper ring is fixed to either one of the sensor body and the moving body, and
the relative-rotation preventing structure is provided between (i) the moving body or the sensor body and (ii) the stopper ring.

In the vehicle weight measurement device, the stopper ring is fixed to the sensor body, and
the relative-rotation preventing structure includes:
a protrusion provided on the stopper ring; and
a flat surface portion provided on the moving body at a position facing the protrusion.

In the vehicle weight measurement device, the stopper ring is fixed to the sensor body, and
the relative-rotation preventing structure includes:
a cutout portion provided on the stopper ring; and
a protrusion provided on the moving body to be engaged in the cutout portion.

A vehicle weight measurement device according to another embodiment of the present invention includes:
a top plate having an upper surface side mounted to a vehicle body side and a lower surface side provided with an opening groove portion;
a diaphragm configured to cover an opening area of the groove portion to form an oil chamber of a predetermined space together with the groove portion, wherein a predetermined measurement fluid is filled in the oil chamber;
an annular collar having a diameter larger than an outer diameter of the opening area of the groove portion and configured to sandwich and tightly fix an outer diameter side surface portion of the diaphragm between the collar and a surface portion outside the opening area of the groove portion;
a piston provided to be moveable on an inner diameter side of the collar, arranged on an upper side of the collar with a gap interposed therebetween, and configured to press the diaphragm by a resilient force of a spring of a suspension device; and
a pressure sensor provided on the top plate and configured to detect a change in pressure of the measurement fluid in the oil chamber which is changeable by movement of the piston,
wherein a stopper ring is fixed to the top plate, and
wherein a relative-rotation preventing structure is provided on the stopper ring and the piston so as to prevent a relative rotation between the stopper ring and the piston.

A vehicle weight measurement device according to still another embodiment of the present invention includes:
a bottom plate having a lower surface side in contact with an arm of a suspension device and an upper surface side provided with an opening groove portion;
a diaphragm configured to cover an opening area of the groove portion and to form an oil chamber of a predetermined space together with the groove portion, wherein a predetermined measurement fluid is filled in the oil chamber;
an annular collar having a diameter larger than an outer diameter of the opening area of the groove portion, and configured to sandwich and tightly fix an outer diameter side surface portion of the diaphragm between the collar and a surface portion outside the opening area of the groove portion;
a piston provided to be moveable in a longitudinal direction of the suspension device on an inner diameter side of the collar, arranged on an upper side of the collar with a gap interposed therebetween, and configured to press the diaphragm by a resilient force of a spring of the suspension device; and
a pressure sensor provided on a lower surface side of the bottom plate and configured to detect a change in pressure of the measurement fluid in the oil chamber which is changeable by movement of the piston,
wherein a rotation-preventing mechanism configured to fit to the arm of the suspension device is integrally provided in at least a part of the lower surface side of the bottom plate,
wherein a protruding portion is provided on each of the bottom plate and the piston,
wherein an annular stopper ring fixed to the piston, and
wherein the stopper ring has at least one cutout in a circumferential direction to which both the protruding portion of the bottom plate and the protruding portion of the piston are engaged, such that the bottom plate is held together with the piston in a non-rotatable manner.

In the vehicle weight measurement device, the stopper ring is configured such that the bottom plate and the piston are not disassembled.

In the vehicle weight measurement device, the sensor body includes a sensor coupling portion configured to be coupled with the pressure sensor, the sensor coupling portion including a sensor coupling hole portion in communication with the groove portion, and
an inner bottom surface of the groove portion is formed in a tapered shape in which a groove height gradually decreases from a groove communication position of the sensor coupling hole portion.

In the vehicle weight measurement device, the sensor body includes a sensor coupling portion configured to be coupled with the pressure sensor, the sensor coupling portion including a sensor coupling hole portion in communication with the groove portion, and
an inner bottom surface of the groove portion is formed with a radial concave groove extending radially from a groove communication position of the sensor coupling hole portion.

### Effect of the Invention

According to the above configuration, a weight measurement device can be provided which includes a fixing member which enables the weight measurement device to be easily assembled to a vehicle while preventing a relative rotation with respect to an arm of a suspension device.

Further, a weight measurement device can be provided which has a configuration which is not disassembled even without a load in an axial direction by a coil spring.

Further, a weight measurement device can be provided which has a configuration which prevents a relative rotation between a member integrated with a sensor body and a member integrated with a piston such that the wear of a member integrated with the piston in sliding contact with a diaphragm is prevented.

### Brief Description of the Drawings

FIG. 1 is a perspective view illustrating a vehicle weight measurement device according to a first embodiment of the present invention.
FIG. 2 illustrates the vehicle weight measurement device according to the first embodiment and is a longitudinal sectional view taken along a line A-A of FIG. 1.
FIG. 3 is a bottom view illustrating the vehicle weight measurement device according to the first embodiment.
FIG. 4 is an enlarged view of a region indicated by arrow B in FIG. 3.
FIG. 5 is a perspective view illustrating a state where the vehicle weight measurement device according to the first embodiment and a coil spring which is a suspension device are assembled.
FIG. 6 is a schematic exploded perspective view illustrating a configuration of the vehicle weight measurement device according to the first embodiment.
FIG. 7 is a schematic perspective view illustrating a case where the vehicle weight measurement device according to the first embodiment is applied to a trailing arm type suspension device.
FIG. 8 is a longitudinal sectional view illustrating a vehicle weight measurement device according to a second embodiment.
FIG. 9 is a cross-sectional view taken along a line C-C of FIG. 8.
FIG. 10 is a partial enlarged view of the second embodiment.
FIG. 11 is a longitudinal sectional view illustrating a vehicle weight measurement device according to a third embodiment.
FIG. 12 is a cross-sectional view taken along a line D-D of FIG. 11.
FIG. 13 is a partial enlarged view of the third embodiment.
FIG. 14 is a longitudinal sectional view illustrating a vehicle weight measurement device according to a fourth embodiment.
FIG. 15 is a plan view of FIG. 14.
FIG. 16 is a partial enlarged cross-sectional view of the fourth embodiment.
FIG. 17 is a longitudinal sectional view illustrating a vehicle weight measurement device according to a fifth embodiment.
FIG. 18 is an enlarged cross-sectional view taken along a line E-E of FIG. 17.

### Detailed Description of the Embodiments

Hereinafter, embodiments of a vehicle weight measurement device will be described with reference to the drawings.

The embodiments relate to an example where a vehicle weight measurement device 100 is provided to a suspension device (suspension) 1 of an automobile.

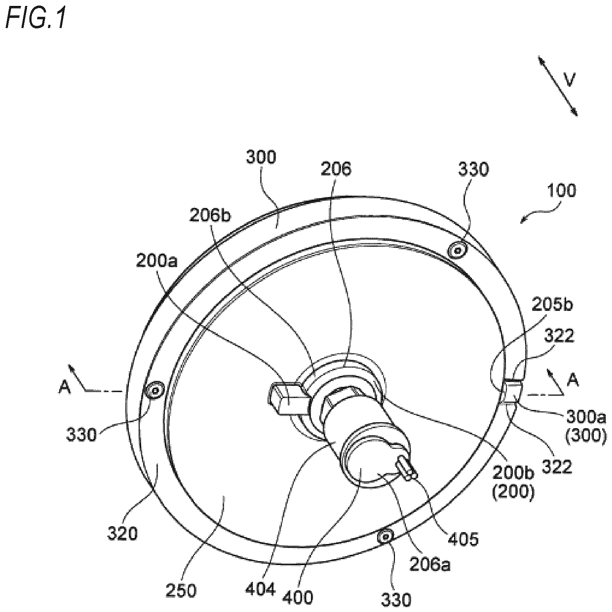

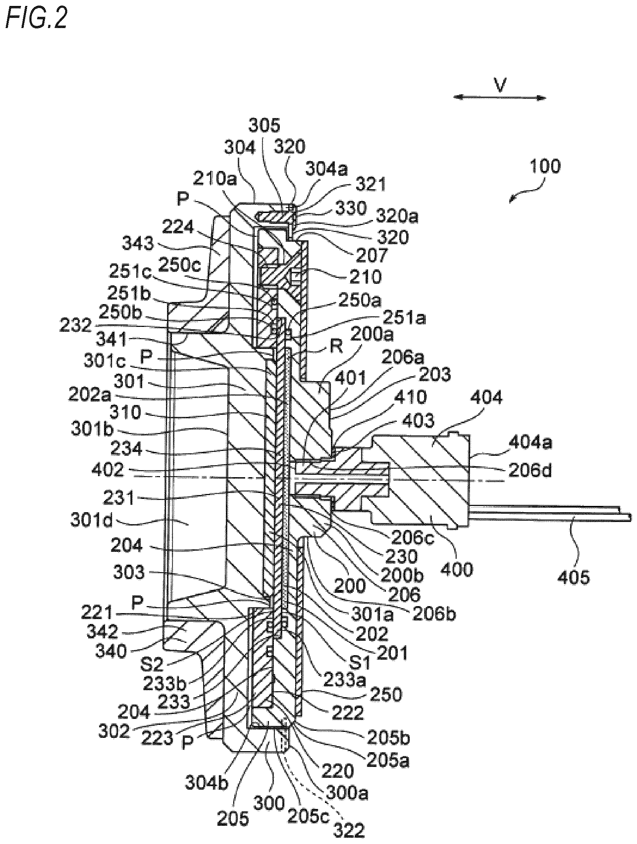

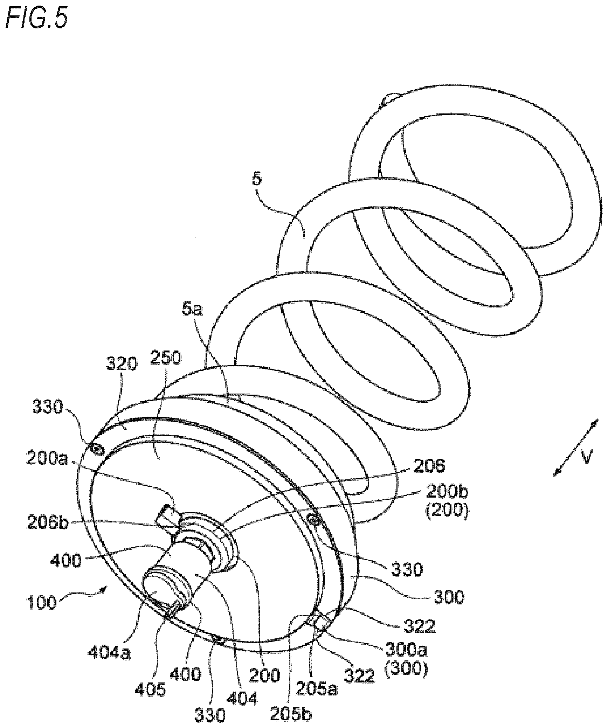

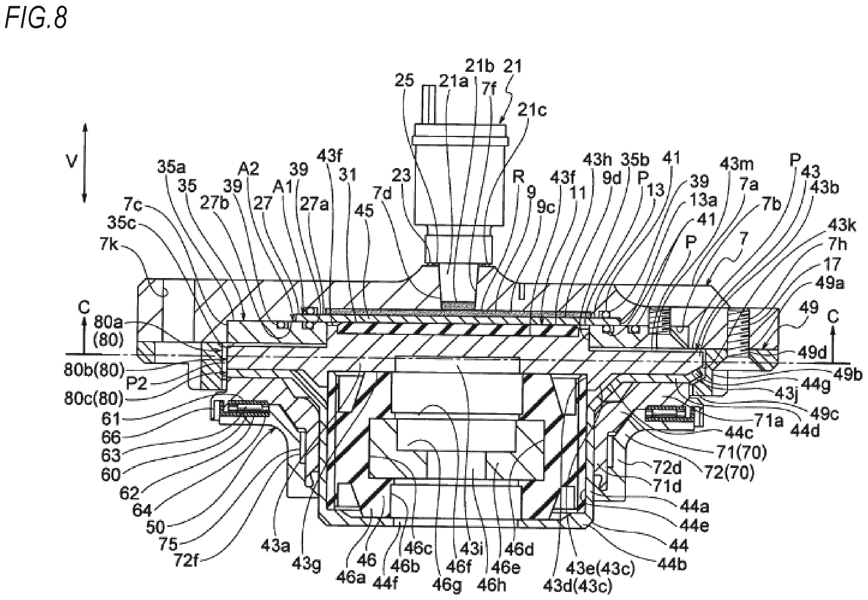

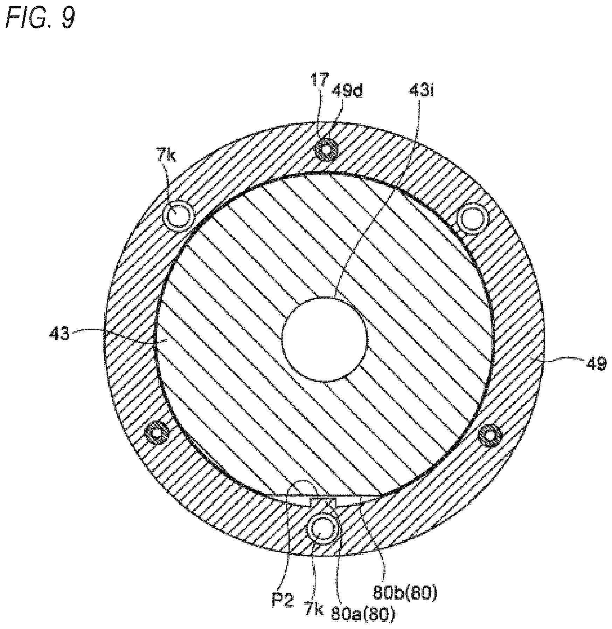

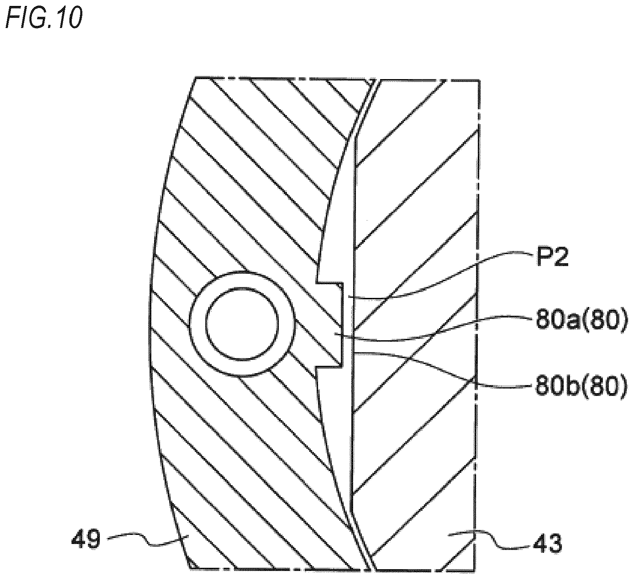

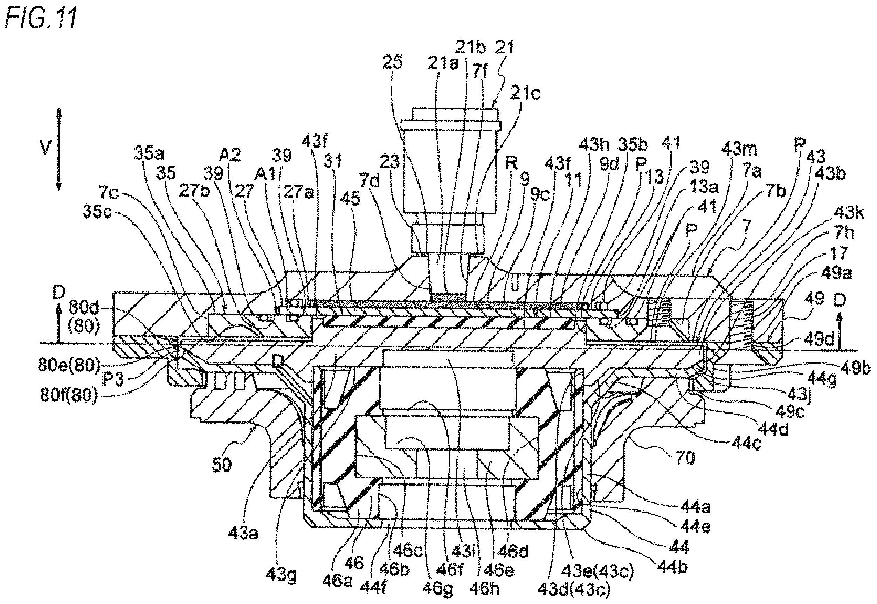

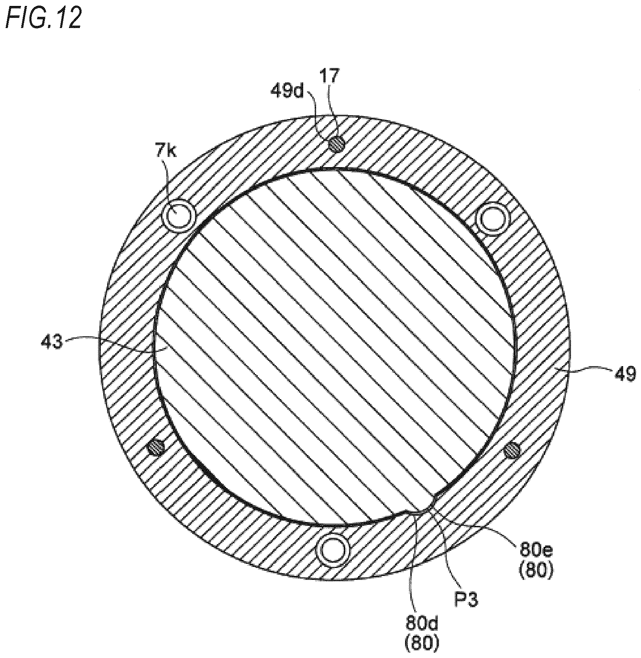

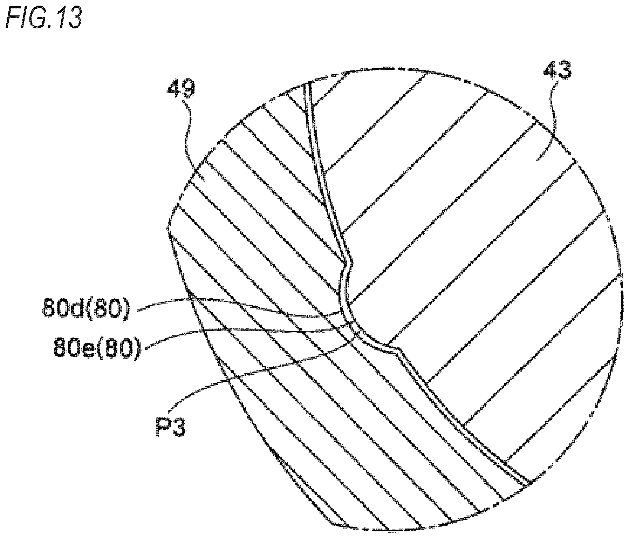

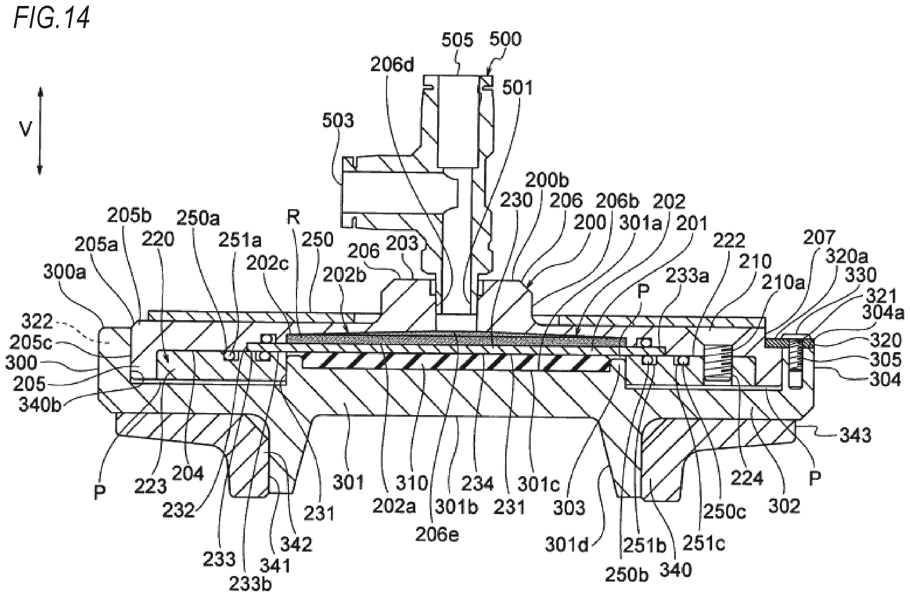

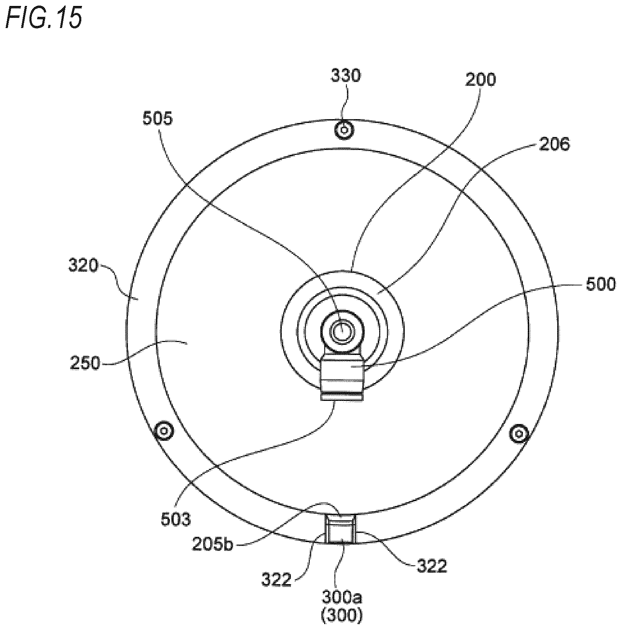

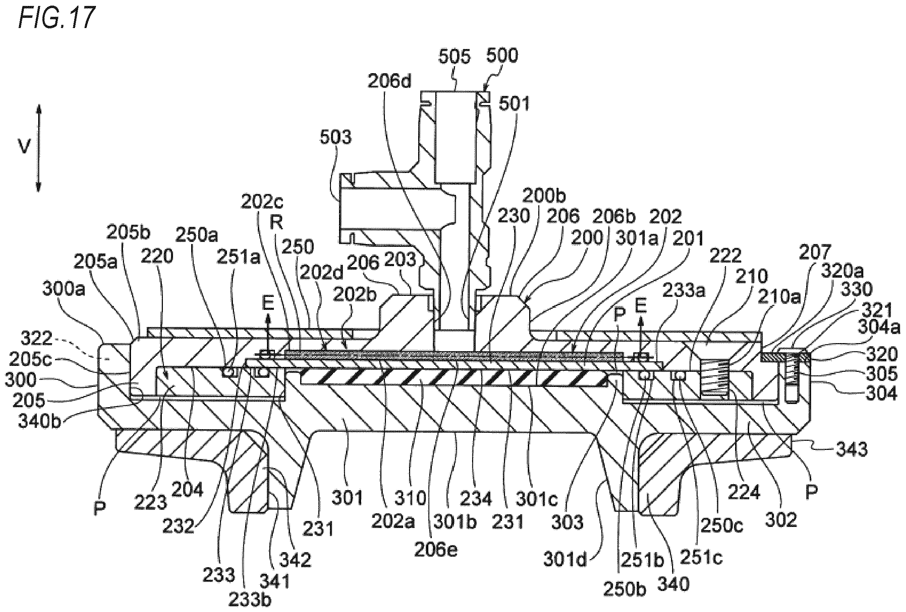

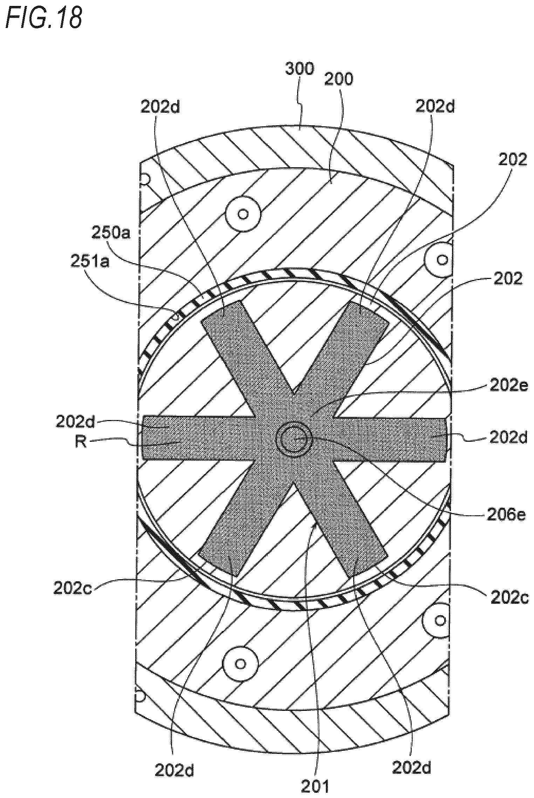

FIGS. 1 to 7 illustrate a first embodiment, FIGS. 8 to 10 illustrate a second embodiment, FIGS. 11 to 13 illustrate a third embodiment, FIGS. 14 to 16 illustrate a fourth embodiment, and FIGS. 17 and 18 illustrate a fifth embodiment.

The embodiments are mere embodiments of the present invention, are not construed to limit the present invention and can be modified within the scope of the present invention.

### First Embodiment

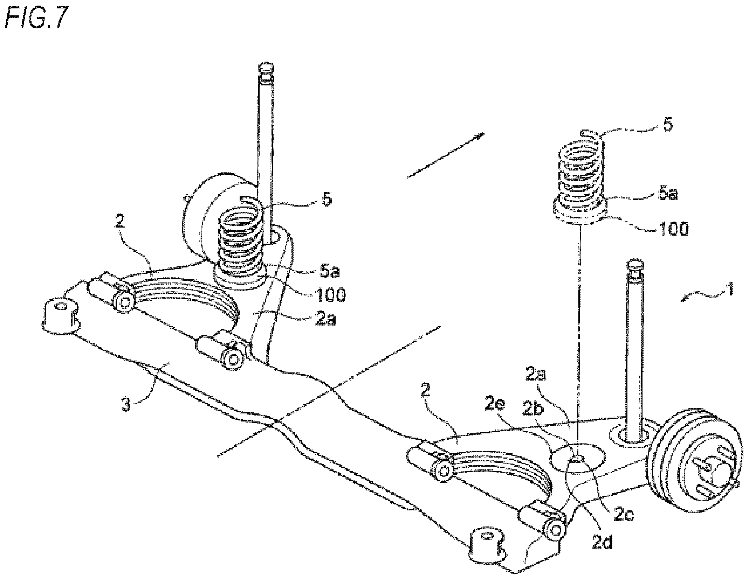

In the first embodiment, for example, as shown in FIG. 7, an example which is applied to a suspension device (suspension) 1 for a rear wheel of a trailing arm type for an automobile is shown. In the trailing arm type, an arm (suspension arm) 2 is pivotally supported at a right angle to a vehicle body center line (see the dashed line in the drawing) from a suspension member 3 (a constitutional component of a suspension device 1) extended across the right and left at a lower side of the vehicle and is configured to swing in an upper-lower direction at a rear side (the side of the arrow in the drawing) of the suspension member 3.

A coil spring 5 is provided on an upper surface 2a of the arm 2 via a vehicle weight measurement device 100 of the present invention. The coil spring 5 is sandwiched between the arm 2 and a lower surface of the vehicle body.

The suspension device 1 shown in FIG. 7 is configured as a known trailing arm type suspension device 1 except that the vehicle weight measurement device 100 of the present invention is incorporated, is not particularly limited to the present embodiment and can be modified within the scope of the present invention. Hereinafter, the vehicle weight measurement device 100 will be described, and the description on other configuration of the suspension device will be omitted.

The vehicle weight measurement device 100 includes a bottom plate (sensor body) 200 having a lower surface side in contact with the arm 2 of the suspension device (suspension) 1, a collar 220 provided on an upper surface of the bottom plate 200, a diaphragm 230 sandwiched and fixed by the bottom plate 200 and the collar 220, a piston (also referred to as moving body, hereinafter the same in the present specification) 300 configured to press the diaphragm 230 in a vertical direction (a direction denoted with an arrow V in the drawing), a pad 310 disposed between the piston 300 and the diaphragm 230, a spring seat 340 configured to receive one end (lower end) of the coil spring 5 of the suspension device 1, an oil chamber 201 formed between the bottom plate 200 and the diaphragm 230 and having a predetermined measurement fluid (operating oil) R filled therein, a pressure sensor 400 provided on a lower surface 203 of the bottom plate 200 and configured to detect a change in pressure of the measurement fluid R filled in the oil chamber 201, and a thin annular stopper ring 320 fixed to a lower end of an outer periphery of the piston 300 and covering a lower end of an outer periphery of the bottom plate 200 (see FIGS. 1 to 6).

The bottom plate 200 has a short cylindrical shape with an open upper surface and includes the lower surface 203 having a disk shape and an annular wall portion 205 protruding in a cylindrical shape with a predetermined thickness from an outer periphery end of the lower surface 203 upward in the vertical direction. The lower surface 203 of the bottom plate 200 is in contact with the arm 2 of the suspension device.

The bottom plate 200 includes an annular upper surface portion 204 recessed from an inner periphery end of the annular wall portion 205 and configured to accommodate the collar 220 (described later), an annular diaphragm accommodating concave portion 231 recessed from an inner diameter of the upper surface portion 204 with a predetermined depth and configured to accommodate the diaphragm 230 (described later), and a cylindrical groove portion 202 recessed from an inner diameter of the diaphragm accommodating concave portion 231 with a predetermined depth and configured to form, together with the diaphragm 230, the oil chamber 201 (described later), which are provided on the upper surface 204 side.

In the first embodiment, a step portion 207 is continuously formed in a circumferential direction on an outer surface 205a of a boundary area of the annular wall portion 205 with the lower surface 203, with a protruding portion 205b remaining in part.

That is, on the outer surface 205a of the boundary area of the annular wall portion 205 with the lower surface 203, the step portion 207 is formed in a substantially C-ring shape in a plan view except for the protruding portion 205b.

The groove portion 202 is formed in a cylindrical shape to open to the upper surface 204 of the bottom plate 200 in the diaphragm accommodating concave portion 231 which is recessed in a cylindrical shape on the upper surface 204 of the bottom plate 200.

The diaphragm accommodating concave portion 231 has an inner surface portion 232 formed in an annular shape having a predetermined width at an outer diameter side of the groove portion 202.

The bottom plate 200 includes a plurality of bolt through holes 210a at predetermined intervals in the circumferential direction, through which coupling bolts (countersunk bolt) 210 for fixing the collar 220 (described later) are to be passed.

The lower surface 203 of the bottom plate 200 facing the arm 2 side is formed with a sensor coupling portion 206 to which the pressure sensor 400 can be coupled.

The sensor coupling portion 206 includes a cylindrical portion 200b penetrating the bottom plate 200 in the vertical direction from a lower surface 206a to the groove portion 202 and coupling the pressure sensor 400, and a non-cylindrical portion 200a formed by protruding a part of the cylindrical portion 200b outward. In the first embodiment, the non-cylindrical portion 200a has a protruding height similar to that of the lower surface 206a of the cylindrical portion 200b (lower surface of the sensor coupling portion 206), and is formed continuously and integrally with the outer peripheral surface 206b of the cylindrical portion 200b (outer peripheral surface of the sensor coupling portion 206) in a rectangular parallelepiped shape protruding outward. The cylindrical portion 200a of the sensor coupling portion 206 has a sensor coupling hole portion 206d communicating with the groove portion 202.

The pressure sensor 400 is configured to detect a change in pressure of the measurement fluid R filled in the oil chamber 201. For example, the pressure sensor 400 is configured to measure a pressure, convert the pressure into a voltage signal and transmit the same, and includes a sensor main body 404 formed in a cylindrical shape, an abutting flange surface 403 integrally provided on an end surface of the sensor main body portion 404, a detecting portion 401 integrally provided on an end surface of the abutting flange surface 403, and a tip end detecting surface 402 provided on a tip end side of the detecting portion 401.

The pressure sensor used in the present invention has known structure and is appropriately used within the scope of the present invention. That is, the pressure sensor is not particularly limited to the above structure and an appropriate sensor can be selected within the scope of the present invention.

In the first embodiment, the detecting portion 401 is inserted into the sensor coupling portion 206, the tip end detecting surface 402 is arranged to face an inside of the oil chamber 201, and the abutting flange surface portion 403 stands in the vertical direction with being closely contacted to an opening edge 206c of the sensor coupling portion 206.

In the pressure sensor 400, the sensor main body 404 extends downward in the vertical direction integrally and continuously with the detecting portion 401, and a lower end 404a thereof is connected to a wire 405 for transmitting an electric signal converted by the pressure sensor 400 to a display device on the vehicle body side.

The sensor coupling portion 206 and the pressure sensor 400 are required to be connected such that the measurement fluid R does not leak.

In the first embodiment, a rubber washer 410 is interposed and fixed between the abutting flange surface portion 403 and the opening edge 206c of the sensor coupling portion 206.

The pressure sensor 400 is not necessarily required to be disposed at the center of the lower surface 203 of the bottom plate 200. The pressure sensor 400 can be provided by arranging the sensor coupling portion 206 at an arbitrary position of the lower surface 203 of the bottom plate 200 as long as the tip end detecting surface 402 faces the inside of the oil chamber 201. That is, the pressure sensor can be arranged at any position where no problem is caused upon the mounting to the vehicle body (arm 2) side.

As the lower surface 203 side of the bottom plate 200 is configured to contact the upper surface 2a of the arm 2 of the suspension device 1, the rubber sheet 250 is interposed therebetween such that the contact of the contact surface is softened.

The bottom plate 200 has a rotation-preventing mechanism with respect to the arm 2 of the suspension device 1.

In the first embodiment, the rotation-preventing mechanism includes the non-cylindrical portion 200a of the sensor coupling portion 206, and a square hole 2d of a hole 2b formed at a position 2e (assembling position), where the weight measurement device 100 is assembled, on the upper surface 2a of the arm 2 of the suspension device 1, and penetrating from the upper surface 2a to the lower surface of the arm 2.

The hole 2b of the arm 2 of the suspension device 1 includes a round hole 2c having a shape slightly larger than the cylindrical portion 200b of the sensor coupling portion 206 of the bottom plate 200, and the square hole 2d integrally connected with the round hole 2c and slightly larger than the non-cylindrical portion 200a, so as to form in a keyhole shape.

When the weight measurement device 100 is assembled to the arm 2 of the suspension device 1, the cylindrical portion 200b of the sensor coupling portion 206 of the bottom plate 200 is inserted into the round hole 2c of the hole 2b of the arm 2, and the non-cylindrical portion 200a (rectangular parallelepiped shape) of the sensor coupling portion 206 is inserted into the square hole 2d of the hole 2b of the arm 2, so that the lower surface 203 of the bottom plate 200 comes into contact with the assembling position 2e of the upper surface 2a of the arm 2 of the suspension device 1 through the rubber sheet 250, and the assembly is completed.

At this time, the non-cylindrical portion 200a of the sensor coupling portion 206 is fitted in the square hole 2d of the hole 2b of the arm 2, so that a relative rotation of the arm 2 and the bottom plate 200 in the circumferential direction is prevented.

Further, the pressure sensor 400 is inserted through the hole 2b of the arm 2 and faces a lower side of the arm 2, so that the wire 405 connected to the pressure sensor 400 is also extended through the lower side of the arm 2 to the display device on the vehicle body side. In this case, the pressure sensor 400 does not rotate due to the engagement between the non-cylindrical portion 200a and the square hole 2d of the hole 2b of the arm 2, so that the wire is not twisted and disconnected.

The non-cylindrical portion 200a and the cylindrical portion 200b of the sensor coupling portion 206 of the bottom plate 200 are simply inserted into the hole 2b of the arm 2 of the suspension device 1, so that the assembling to the vehicle can be facilitated as compared to the case of assembling to the arm 2 of the suspension device 1 by a fixing member such as a screw.

In the first embodiment, the rotation-preventing mechanism configured by the non-cylindrical portion 200a of the sensor coupling portion 206 and the square hole 2d of the arm 2 of the suspension device 1 is described as an example, but specific shapes of the non-cylindrical portion 200a and the square hole 2d are not limited thereto as long as the non-cylindrical portion 200a is inserted into the square hole 2d to prevent the relative rotation. For example, a configuration where a part of the cylindrical portion 200b of the sensor coupling portion 206 is recessed in a radial direction in the non-cylindrical portion 200a, and the square hole 2d is a square convex portion formed in a convex shape that is engaged with the recessed non-cylindrical portion 200a may also be contained within the scope of the present invention. The non-cylindrical portion 200a does not necessarily have an angular shape and may have another shape. Further, in the first embodiment, the sensor coupling portion 206 is configured by the cylindrical portion 200b and the non-cylindrical portion 200a. However, the sensor coupling portion 206 itself may also formed into a predetermined angular shape or elliptical shape. That is, the sensor coupling portion 206 may be formed in a non-cylindrical shape and can be modified within the scope of the present invention as appropriate.

Also, a plurality of non-cylindrical portions 200a may be provided, which can be appropriately modified within the scope of the present invention. In this case, a plurality of square holes 2d of the hole 2b of the arm 2 in the suspension device 1 may be formed in accordance with the number of non-cylindrical portions 200a.

The diaphragm 230 is formed in a short cylindrical shape (disk shape) configured to cover an opening area 202a of the groove portion 202 to form the oil chamber 201 of a predetermined space together with the groove portion 202, and is engaged in the annular diaphragm accommodating concave portion 231 formed on the upper surface 204 of the bottom plate 200.

For example, in the first embodiment, the diaphragm 230 has a sealing area 233 sandwiched between the bottom plate 200 and the collar 220 on an outer diameter side, and a pressing area 234 configured to be integrally deformable on an inner diameter side of the sealing area 233.

The pressing area 234 is configured to have a width capable of covering the opening area 202a of the groove portion 202, and the oil chamber 201 is formed in a predetermined area by the pressing area 234 and the groove portion 202 of the bottom plate 200.

A material of the diaphragm 230 has flexibility and durability (cold resistance/wear resistance/oil resistance) and is not limited. For example, nitrile rubber, Teflon (registered trademark), chloroprene rubber, fluorine rubber, ethylenepropylene rubber or the like may be used as the material of the diaphragm 230, depending on a characteristic of the fluid. A diaphragm formed of metal such as thin stainless steel may be also used, which is within the scope of the present invention.

The oil chamber 201 is fully hermetically filled with the predetermined measurement fluid R without generating air bubbles. The pressure of the measurement fluid R, which is to be applied to the tip end detecting surface 402 of the pressure sensor 400 facing the inside of the oil chamber 201, can be changed by pressing the diaphragm 230 toward the groove portion 202 due to the movement of the piston 300.

In the first embodiment, the collar 220 is formed in a predetermined short cylindrical shape having a thickness in the vertical direction so as to enter an area (the annular upper surface 204) surrounded by the annular wall portion 205 of the bottom plate 200, and having an outer diameter which can be fitted to an inner peripheral surface of the annular wall portion 205 of the bottom plate 200 and an inner diameter defined by an annular inner surface 221 located inside the inner surface portion 232 of the diaphragm accommodating concave portion 231.

On an outer peripheral side of the lower surface 222 of the collar 220, a plurality of bolt fixing holes 224 are provided in the circumferential direction at the same intervals as the bolt through holes 210a of the bottom plate 200 so as to be coaxially arranged in the vertical direction with the bolt through holes 210a of the bottom plate 200.

The bolt through holes 210a of the bottom plate 200 are communicated with the bolt fixing holes 224 of the collar 220, and the coupling bolts (countersunk bolt) 210 is fastened from the lower surface 203 side of the bottom plate 200, so that the collar 220 is fixed to the bottom plate 200 to be integral.

In the first embodiment, the sealing area 233 of the diaphragm 230 is sandwiched and hermetically fixed between the lower surface 222 of the collar 220 and the diaphragm accommodating concave portion 231.

In the first embodiment, for example, as shown below, a predetermined seal member is provided to improve the sealing effect.

First, an annular first seal groove 251a is provided in the inner surface portion 232 of the diaphragm accommodating concave portion 231, and a first O-ring 250a is inserted such that the first O-ring 250a is compressed and seals between the lower surface portion 233a of the sealing area 233.

Second, an annular second seal groove 251b is provided in the lower surface 222 of the collar 220, and a second O-ring 250b is inserted such that the second O-ring 250b is compressed and seals between the upper surface portion 233b of the sealing area 233.

Further, an annular third seal groove 251c with a diameter larger than the second seal groove 251b is provided in the lower surface 222 of the collar 220, and a third O-ring 250c is inserted such that the third O-ring 250c is compressed and seals between the upper surface portion 233b of the sealing area 233.

Since the first O-ring 250a is compressed and seals between the lower surface portion 233a of the sealing area 233, the measurement fluid R can be sufficiently prevented from being leaked from the oil chamber 201. However, according to the first embodiment, a multiple sealing structure is adopted as described above.

That is, the second O-ring 250b is compressed and seals between the upper surface portion 233b of the sealing area 233, and on the outer diameter side of the second O-ring 250b, the third O-ring 250c is compressed and seals between the lower surface 222 of the collar 220 and the upper surface 204 of the bottom plate 200.

Therefore, in addition to the first O-ring 250a arranged closest to the oil chamber 201, the second O-ring 250b and the third O-ring 250c are arranged on an outer side of the first O-ring 250a, so that the sealing reliability is very high. In the first embodiment, since the sealing structure is provided in the area without any relative movement as described above, the seal durability is also high.

Further, the sealing reliability can be further enhanced if the sealing structure is configured such that the sealing area 233 of the diaphragm 230 is formed thicker than the diaphragm accommodating concave portion 231, and the thick sealing area 233 is compressed when being sandwiched between the bottom plate 200 and the collar 220 so as to have a sealable thickness.

Each seal member may have any configuration in which one member configuring the sealing area and the contact area is provided with the seal grooves (251a, 251b, 251c) and the O-rings (250a, 250b, 250c) are inserted in the seal grooves (251a, 251b, 251c), so that the O-rings (250a, 250b, 250c) are compressed and seal between the one member and the other member. That is, the present invention is not limited to the configuration as to whether the seal grooves and the O-rings are provided at one member or the other member, and any of the configurations is contained within the scope of the present invention.

In the first embodiment, the piston 300 includes a cylindrical portion 301 having an outer diameter in sliding contact with the annular inner surface 221 (inner diameter of the collar 220) of the collar 220, a flange portion 302 provided to integrally extend in a horizontal direction from the outer diameter of the cylindrical portion 301 and having a diameter larger than the outer diameter of the collar 220, an annular portion 303 integrally extended downward in a vertical direction from an inner diameter of the flange portion 302, and a hanging circumferential edge portion 304 hanging down slightly over the step portion 207 of the bottom plate 200 integrally from the outer circumferential portion of the flange 302.

A lower surface 301a side of the cylindrical portion 301 is formed with a lower groove portion 301c opening in a cylindrical shape, and an upper surface 301b side of the cylindrical portion 301 is formed with a cylindrical spring seat fitting cylindrical portion 301d to protrude upward which is open upward.

In a lower surface 304a of the hanging circumferential edge portion 304, screw fixing holes 305 configured to fasten and fix coupling screws 330 for fixing a stopper ring 320 (described later) are provided at predetermined intervals in the circumferential direction.

Further, on the lower surface 304a of the hanging circumferential edge portion 304, a rectangular protruding portion 300a integrally protruding downward in a direction perpendicular to a part of the circumferential direction is formed. A circumferential width of the protruding portion 300a is set to the same circumferential width as the protruding portion 205b of the bottom plate 200.

The lower groove portion 301c of the piston 300 is fitted with the cylindrical pad 310 which covers the opening area of the lower groove portion 301c and is thicker than the depth of the lower groove portion 301c in the vertical direction.

Although not particularly limited, since the pad 310 is configured to slide between the diaphragm 230 and the piston 300, the pad is preferably formed of a rigid synthetic resin material having a high self-lubricating property, for example, polyacetal resin such as Delrin (registered trademark), or the like. A groove provided on the upper surface of the pad 310 may be filled with a lubricant to lubricate a sliding surface between the pad 310 and the diaphragm 230. A configuration where the piston 300 is directly contacted to the diaphragm without the pad 310 is also contained within the scope of the present invention.

A predetermined gap P is set between the lower surface 301a of the cylindrical portion 301 of the piston 300 and the diaphragm 230, and between the lower surface 302b of the flange portion 302 of the piston 300 and the upper surface 223 of the collar 220.

The predetermined gap P needs to be set as a gap larger than a distance where the piston 300 is to be advanced and retreated in a longitudinal direction (the vertical direction denoted with the arrow V in the drawings) of the suspension device due to the deformation or the like of the diaphragm 230 when the weight measurement device receives an assumed rated load. If the gap is smaller than the distance where the piston 300 is to be advanced and retreated, the gap disappears while measuring the weight of the vehicle, and the movement of the piston 300 is restricted, which hinders accurate weight measurement.

Therefore, the pad 310 is set to be thicker than the depth in the vertical direction of the lower groove portion 301c, so that the pad 310 protrudes from the lower groove portion 301c and is fitted so as to be in contact with the diaphragm 230. Accordingly, the pad 310 presses the diaphragm 230 in response to the movement of the piston 300.

The stopper ring 320 is formed in a thin annular shape having an outer diameter similar to the hanging circumferential edge portion 304 of the piston 300 and an inner diameter covering the step portion 207 of the bottom plate 200, and has a cutout 322 in the circumferential direction thereof. That is, the stopper ring 320 is formed in a substantially C-ring shape in a plan view.

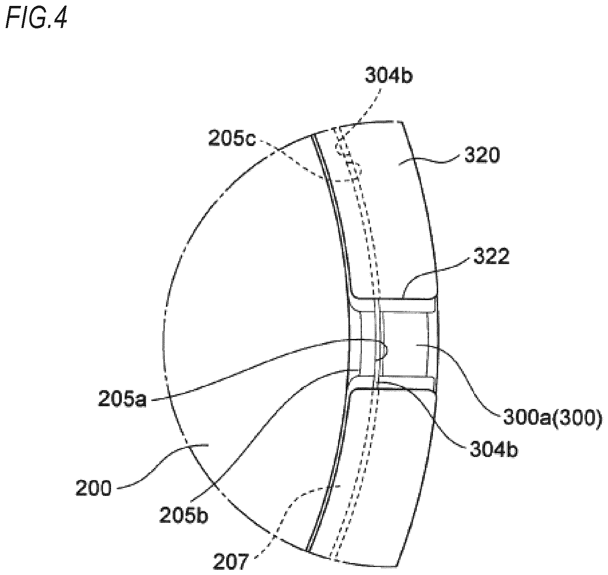

A horizontal width of the cutout 322 is set to such a width that both the protruding portion 205b (a portion where the step portion 207 is not formed) of the bottom plate 200 and the protruding portion 300a of the hanging circumferential edge portion 304 of the piston 300 can be engaged in parallel in the horizontal direction (see FIG. 4).

A radial width of the cutout 322 may be set to have a slight gap with the protruding portion 205b of the bottom plate 200 such that the protruding portion 205b can be advanced and retreated.

The stopper ring 320 has a plurality of screw passing holes 321 in the circumferential direction at the same intervals as the screw fixing holes 305 so as to be coaxially arranged in the vertical direction with the screw fixing holes 305 of the hanging circumferential edge portion 304 of the piston 300.

When mounting the stopper ring 320, first, the bottom plate 200 and the piston 300 are arranged such that the protruding portion 205b (a portion where the step portion 207 is not formed) of the bottom plate 200 and the rectangular protruding portion 300a formed on the lower surface 304a of the hanging circumferential edge portion 304 of the piston 300 are arranged consecutively in the radial direction, and then, the stopper ring 320 is set such that the protruding portion 205b and the protruding portion 300a are engaged into the cutout 322.

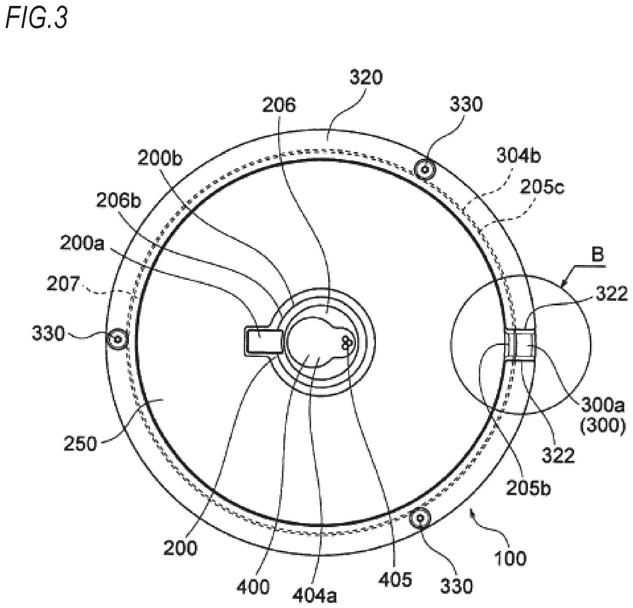

At this time, the outer diameter 205c of the annular wall portion 205 of the bottom plate 200 and the inner diameter 304b of the hanging circumferential edge portion 304 of the piston 300 face each other through a slight gap (see FIG. 3 and FIG. 4).

The screw passing hole 321 of the stopper ring 320 is brought into communication with the screw fixing hole 305 of the hanging circumferential edge portion 304 of the piston 300, and a fastening screw 330 is fastened from a lower side 320a of the stopper ring 320, so that the stopper ring 320 is fixed to the lower surface 304a of the hanging circumferential edge portion 304 of the piston 300.

At this time, the stopper ring 320 has the outer diameter similar to the hanging circumferential edge portion 304 of the piston 300 and the inner diameter covering the step portion 207 of the bottom plate 200, so that when the stopper ring 320 is fastened and fixed to the hanging circumferential edge portion 304 of the piston 300, downward movement (movement to disassemble the piston 300 and the bottom plate 200) in the vertical direction of the step portion 207 of the bottom plate 200 is restricted by the stopper ring 320. Accordingly, even before the weight measurement device 1 is mounted on a vehicle (when the extension force of the coil spring is not loaded in the axial direction), they are not disassembled into a member integrated with the bottom plate 200 and a member integrated with the piston 300, so that the weight measurement device 1 is easy to handle in transportation.

The piston 300 and the stopper ring 320 are fastened and fixed by the fastening screw 330, and the protruding portion 205b of the bottom plate 200 is engaged with the cutout 322 of the stopper ring 320 so as to be able to move in an advancing and retracting direction of the piston 300 while the circumferential rotation being restricted, so that the relative rotation between the piston 300 and the bottom plate 200 is prevented.

Therefore, the wear of the diaphragm 230 and the piston 300 (pad 310) can be prevented, and the relative rotation of the coil spring can be prevented, so that the load detection accuracy of the weight measurement device can be maintained.

In the first embodiment, the case where the stopper ring 320 includes one cutout 322, the piston 300 includes one protruding portion 300a and the bottom plate 200 includes one protruding portion 205b is described as an example. However, the number of the cutout 322 of the stopper ring 320, protruding portion 300a of the piston 300, or the protruding portion 205b of the bottom plate 200 is not limited thereto, and the number may be plural, which is within the scope of the present invention. For example, in a case where the stopper ring 320 includes two cutouts 322, accordingly, the piston 300 includes two protruding portions 300a and the bottom plate 200 includes two protruding portions 205b.

In the first embodiment, screw fixing is used to fasten the stopper ring 320 and the lower surface 304a of the hanging circumferential edge portion 304 of the piston 300. However, the present invention is not limited thereto, and other fastening member may also be used as long as the stopper ring 320 and the lower surface 304a of the hanging circumferential edge portion 304 of the piston 300 are fastened so as not to be separated easily. For example, welding or strong adhesion may also be used for fastening.

The spring seat 340 includes a large-diameter cylindrical portion 342 having a cylindrical through hole 341 capable of mounting the spring seat fitting cylindrical portion 301d of the cylindrical portion 301 of the piston 300, and a flange portion 343 integrally extending outwards in the horizontal direction from a lower end of the large-diameter cylindrical portion 342. The large-diameter cylindrical portion 342 opens upward and downward.

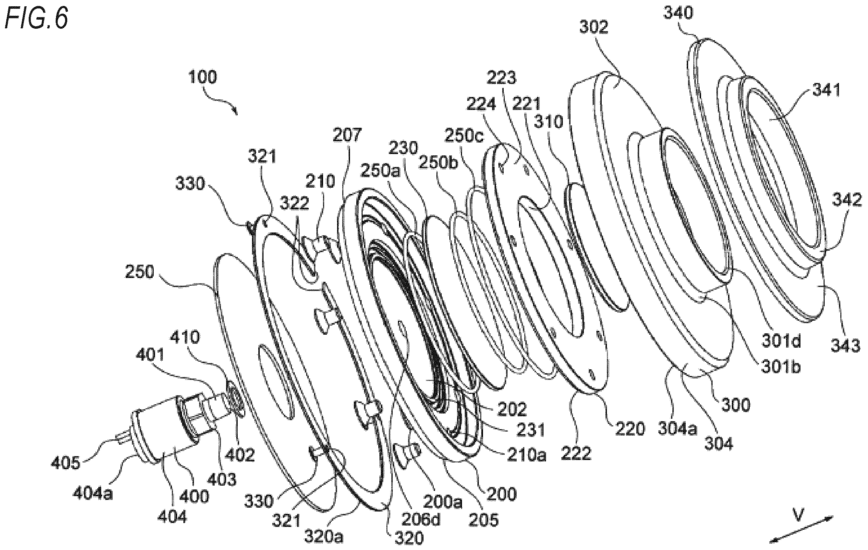

One end (lower end) 5a of the coil spring 5 configuring the suspension device 1 is abutted to an upper surface of the flange portion 343 in the vertical direction (refer to FIGS. 6 and 7).

In the first embodiment, the vehicle weight measurement device 100 applied to a trailing arm type suspension device is described as an example. However, the present invention can also be applied to other types of suspension devices as long as the suspension device has a structure in which the coil spring 5 is independently sandwiched between the arm of the suspension device 1 and the lower surface of the vehicle body. For example, the present invention may also be provided to a suspension device such as a semi-trailing arm type or a torsion beam type.

### Second Embodiment

FIGS. 8 to 10 illustrate a second embodiment of the present invention.

A vehicle weight measurement device according to a second embodiment of the present invention applied to a suspension device for a front wheel.

The vehicle weight measurement device of the second embodiment includes: a top plate (sensor body) 7 having an upper surface side mounted to a vehicle body (vehicle) side and a lower surface side provided with an opening groove portion 9c; a diaphragm 11 configured to cover an opening area 9d of the groove portion 9c to form, together with the groove portion 9c, an oil chamber 9 of a predetermined space having a predetermined measurement fluid R filled therein; an annular collar 35 having a diameter larger than the outer diameter of the opening area 9d of the groove portion 9c and configured to sandwich and tightly fix an outer diameter side surface portion of the diaphragm 11 between the collar 35 and a surface portion outside the opening area 9d of the groove portion 9c; a first piston 43 and a second piston 44 (moving body) provided to be moveable on an inner diameter side of the collar 35, arranged on an upper side of the collar 35 with a gap P interposed therebetween, and configured to press the diaphragm 11 by a resilient force of a spring (not shown) of the suspension device; and a pressure sensor 21 provided on the top plate 7 and configured to detect a change in pressure of the measurement fluid R in the oil chamber 9 which is changeable by movement of the first piston 43 and the second piston 44. A stopper ring 49 is fixed to the top plate 7, and a relative-rotation preventing structure 80 is provided on the stopper ring 49, the first piston 43 and the second piston 44, so as to prevent the relative rotation between the stopper ring 49 and the first piston 43 and second piston 44 (see FIG. 8).

The top plate 7 is formed to have a short cylindrical shape having a predetermined thickness, and has an upper surface 7a fixed to the vehicle body side, the lower surface 7b formed with a groove portion 9c opening in a cylindrical shape, and an annular wall part 7c protruding in a cylindrical shape downwards from an outer peripheral end in the vertical direction.

The groove portion 9c opening in a cylindrical shape is formed toward the upper surface 7a of the top plate 7 in the diaphragm accommodating concave portion 13 which is recessed in a cylindrical shape on the lower surface 7b of the top plate 7.

The diaphragm accommodating concave portion 13 has a surface portion 13a formed in an annular shape having a predetermined width at an outer diameter side of the groove portion 9c.

The upper surface 7a of the top plate 7 facing the vehicle body side is formed with a sensor coupling portion 7d to which the pressure sensor 21 can be coupled. The sensor coupling portion 7d includes a sensor coupling hole portion 7f penetrating the top plate 7 in the vertical direction from the upper surface 7a to the groove portion 9c and communicating with the groove portion 9c.

The sensor coupling portion 7d and the pressure sensor 21 are required to be connected so that the measurement fluid R does not leak.

The top plate 7 has a plurality of bolt holes 7k in which fixing bolts are to be fasted so as to fasten and fix the same to a main body frame (for example, a cross member) of an automobile, and a plurality of bolt fixing holes 7h in which coupling bolts 17 are to be fastened so as to fix the stopper ring 49 (described later).

The pressure sensor 21 is configured to detect a change in pressure of the measurement fluid R filled in the oil chamber 9. For example, a known structure configured to measure a pressure, convert the pressure into a voltage signal and transmit the signal same is appropriately used within the scope of the present invention. The pressure sensor is not particularly limited and an optimal sensor can be appropriately selected within the scope of the present invention.

In the first embodiment, the detecting portion 21a is inserted into the sensor coupling portion 7d, a tip end detecting surface 21b is arranged to face an inside of the oil chamber 9, and an abutting flange surface portion 21c stands in the vertical direction to be closely contacted to an opening edge of the sensor coupling portion 7d.

In the second embodiment, a washer 23 is interposed and fixed between the abutting flange surface portion 21c and the opening edge portion of the sensor coupling portion 7d. In order to prevent the measurement fluid R from being leaked, a predetermined sealing member, an O-ring 25 is arranged in the second embodiment.

The pressure sensor 21 is not necessarily required to be disposed at the center of the upper surface 7a of the top plate 7. For example, the sensor coupling portion 7d may be provided at an arbitrary position of the upper surface 7a of the mounting part 7 as long as the tip end detecting surface 21b faces the inside of the oil chamber 9. That is, the pressure sensor can be arranged at any position where no problem is caused upon the mounting to the vehicle body side.

The diaphragm 11 is formed in a cylindrical shape configured to cover an opening area 9d of the groove portion 9c to form the oil chamber 9 of a predetermined space together with the groove portion 9c, and is fitted in the diaphragm accommodating concave portion 13 formed in a cylindrical shape on the lower surface 7b of the top plate 7.

For example, in the second embodiment, the diaphragm 11 includes an annular sealing area 27 on an outer diameter side, and a pressing area 31 is provided on an inner diameter side of the sealing area 27.

The pressing area 31 is configured to have a width capable of covering the opening area 9d of the groove portion 9c, and the oil chamber 9 of a predetermined area is formed by the pressing area 31 and the groove portion 9c of the top plate 7.

The sealing area 27 is formed thicker than a depth of the diaphragm accommodating concave portion 13 in the vertical direction, and is configured to have thicknesses so as to be compressed and sealed when being sandwiched by the collar 35.

The description of the first embodiment is used for the material of the diaphragm 11, and the description here is omitted.

The oil chamber 9 is fully hermetically filled with the predetermined measurement fluid R without generating air bubbles. A pressure of the measurement fluid R can be changed by movement of the first piston 43 (described later).

In the second embodiment, the collar 35 is formed in a predetermined short cylindrical shape having a thickness in the vertical direction so as to enter an area surrounded by the annular wall portion 7c of the top plate 7. The collar 35 is formed to have an outer diameter which can be fitted to an inner peripheral surface of the annular wall portion 7c of the top plate 7 and an inner diameter defined by an annular inner surface 35b located inside a surface portion 13a of the diaphragm accommodating concave portion 13.

The sealing area 27 of the diaphragm 11 is tightly fixed with being sandwiched between an upper surface 35a of the collar 35 and a surface portion (a surface portion at the outer side of the surface portion 13a of the diaphragm accommodating concave portion 13) of the lower surface 7b of the top plate 7 located at an outer side than the opening area 9d of the groove portion 9c.

In the second embodiment, a tight fixing area A1 of the upper surface portion 27a of the sealing area 27 of the diaphragm 11, and a tight fixing area A2 between the lower surface portion 27b of the sealing area 27 of the diaphragm 11 and the upper surface 35a of the collar 35 adopt a sealing structure by a surface seal, respectively.

A sealing structure by a separate seal member is adopted, in addition to the sealing structures of the surface seals.

In the second embodiment, an annular seal groove 39 is provided in an area between the surface portion 13a of the diaphragm accommodating concave portion 13 and the groove portion 9c, and an O-ring 41 is inserted such that the O-ring 41 is compressed and seals with the upper surface portion 27a of the sealing area 27.

The upper surface 35a of the collar 35 is provided with two annular seal grooves 39 having large and small diameters, and O-rings 41 are inserted in the seal grooves 39, so that the O-rings 41 are compressed and seal with the lower surface portion 27b of the sealing area 27, and with the lower surface 7b of the top plate 7.

Since the O-rings 41 are compressed and seal with the upper surface portion 27a of the sealing area 27, it is possible to sufficiently reduce or prevent the measurement fluid R from being leaked from the oil chamber 9. According to the second embodiment, since the multiple sealing structures are adopted as described above, even though the measurement fluid R is leaked from the sealing structure of the sealing area 27, the measurement fluid R can be prevented from being leaked by the other sealing structure, so that it is possible to securely prevent the measurement fluid R from being leaked from the oil chamber 9. Therefore, it is possible to highly improve the sealing reliability.

In the second embodiment, since the sealing structure is provided in the area without relative movement as described above, the seal durability is also high.

Each seal member may have any configuration where one member configuring the sealing and fixing area or the contact area is provided with the seal groove 39 and the O-ring 41 is inserted in the seal groove 39, so that the O-ring 41 is compressed and seal between the one member and the other member. That is, the present invention is not limited to the configuration as to whether the seal groove 39 and the O-ring 41 are provided at one member or the other member, and any of the configurations is contained within the scope of the present invention.

In the second embodiment, the first piston 43 includes a cylindrical portion 43a having an outer diameter in sliding contact with an annular inner surface portion 35b (inner diameter of the collar 35) of the collar 35, a flange portion 43b provided to integrally extend in a horizontal direction from the outer diameter of the cylindrical portion 43a and having a diameter larger than the outer diameter of the collar 35, and a tapered cylindrical portion 43c formed of an annular inner surface portion 43d and a tapered outer surface portion 43e, which is formed to extend downward integrally from an inner diameter of the flange portion 43b.

A chamfered portion 43k is formed on an outer periphery end 43j of the lower surface of the flange portion 43b.

An upper groove portion 43h opening in a cylindrical shape having a diameter smaller than that of the groove portion 9c of the top plate 7 is formed on an upper surface 43f side of the cylindrical portion 43a, and a lower groove portion 43i opening in a cylindrical shape having a diameter smaller than that of the upper groove portion 43h is formed on a lower surface 43g side of the cylindrical portion 43a.

The upper groove portion 43h of the first piston 43 is fitted with a cylindrical pad 45 which covers the opening area of the upper groove portion 43h and is thicker than the depth of the upper groove portion 43h in the vertical direction.

The pad 45 is thicker than the depth of the upper groove portion 43h in the vertical direction, so that in a state where an upper surface of the pad 45 is in contact with a lower surface of the diaphragm 11, a gap P is set between the upper surface 43f of the cylindrical portion 43a of the first piston 43 and the diaphragm 11, and between the upper surface 43m of the flange portion 43b of the first piston 43 and a lower surface 35c of the collar 35. Accordingly, the first piston 43 is configured to be movable in the vertical direction.

The description of the first embodiment is used for the material of the pad 45, and the description here is omitted.

In the second embodiment, the second piston 44 includes a thin long cylindrical portion 44a having an annular inner peripheral surface 44e with the same diameter as that of an annular inner surface portion 43d (inner surface of the tapered cylindrical portion 43c) of the first piston 43; a thin bottom portion 44b integrally extending in the horizontal direction from a lower end of the long cylindrical portion 44a and having a rod insertion hole 44f at the center; a thin tapered cylindrical portion 44c integrally provided upward in the vertical direction in an expanding manner from an upper end of the long cylindrical portion 44a; and a thin flange portion 44d integrally extending in the horizontal direction from an outer periphery end of the tapered cylindrical portion 44c to have the same outer diameter as the flange portion 43b of the first piston 43.

An outer diameter end of the flange portion 44d is formed such that an engaging portion 44g is formed along the chamfered portion 43k of the flange portion 43b of the first piston 43 so as to extend upward in the vertical direction in an expanding manner.

In an inner space of the long cylindrical portion 44a of the second piston 44, an in-bush metal member 46e fitted to the center of a rubber bush 46 is stored together with the rubber bush 46 having a long cylindrical shape.

A fitting concave portion 46c is formed at a center position in the vertical direction of an inner peripheral surface 46b of the rubber bush 46. The in-bush metal member 46e is fitted in the fitting recessed portion 46c.

In the second embodiment, for example, an engaging area 46a is formed on an inner diameter side of the rubber bush 46, which is thicker in the vertical direction than an outer diameter side. The engaging area 46a is formed to be thicker than the vertical depth of the long cylindrical portion 44a of the second piston 44 so as to protrude upward and downward therefrom and is sandwiched by the lower surface 43g of the cylindrical portion 43a of the first piston 43 so as to firmly hold the in-bush metal member 46e fitted in the fitting recessed portion 46c.

The in-bush metal member 46e has an outer diameter the same as that of an inner peripheral surface 46d of the fitting recessed portion 46c of the rubber bush 46, and an upper groove portion 46g opening in a cylindrical shape with the same diameter as the inner peripheral surface 46b of the rubber bush 46 is formed at the center on the upper surface 46f side of the in-bush metal member 46e. The upper groove portion 46g is provided at the center thereof with a rod insertion hole 46h penetrating in an upper-lower direction. The rod insertion hole 46h is provided with a receiving portion to which a step portion of a rod tip end (not shown) can be contacted, so that a large diameter hole and a small diameter hole are continuously formed.

The second piston 44 is configured to be moveable in a longitudinal direction of the suspension device while the rod tip end, which is inserted in the rod insertion hole 46h of the in-bush metal member 46e in the inner space of the long cylindrical portion 44a, of a shock absorber (not shown) configuring the suspension device protruding to the upper surface 46f side of the in-bush metal member 46e, is attached and fastened via a nut (not shown), and the fastening portion is supported by the rubber bush 46.

The pad 45 fitted in the upper groove portion 43h of the first piston 43 presses the diaphragm 11 by the resilient force of a spring (not shown) of the suspension device 1 via the flange portion 43b of the first piston 43 which is in close contact with the flange portion 44d of the second piston 44 in the vertical direction.

A bearing unit 50 is configured to be interposed and relatively rotatable between a lower surface of the flange portion 44d of the second piston 44 and an upper surface of a spring seat (not shown). In the second embodiment, the bearing unit 50 includes a thrust needle bearing 60 swingably supporting a load in the longitudinal direction of the suspension device, a slide bush 75 configured not to receive a load while causing constant damping to swinging, and a case 70 which accommodates the thrust needle bearing 60 and the slide bush 75 (see FIG. 8).

The thrust needle bearing 60 is configured to be relatively rotatable. The thrust needle bearing 60 includes an upper race (upper bearing ring) 61 arranged on an upper case 71 side, a lower race (lower bearing ring) 62 arranged on a lower case 72 side, a plurality of needle rollers 63 as rolling elements arranged along a bearing internal space formed between the pair of races 61 and 62, and a cage 64 configured to rotatably hold the plurality of needle rollers 63.

The upper race 61 is formed in an annular shape having a raceway surface on a lower surface thereof. The lower race 62 has a raceway surface on an upper surface thereof and includes an annular portion formed wider than the upper race 61 and a cylindrical portion standing from an outer diameter end of the annular portion integrally. The upper race 61 and the lower race 62 are assembled such that the raceway surfaces of the upper race 61 and the lower race 62 face each other.

The case 70 is configured to sandwich the thrust needle bearing 60 by the upper case 71 and the lower case 72. The upper case 71 is interposed between the upper surface of the upper race 61 of the thrust needle bearing 60 and the lower surface of the flange portion 44d of the second piston 44, and the lower case 72 is interposed between the lower surface of the lower race 62 of the thrust needle bearing 60 and a spring bush (not shown).

In the second embodiment, the thrust needle bearing 60 disposed in a thrust manner largely reduces the friction when swinging in a steering direction, and swingably supports the vehicle weight. The slide bush 75 is arranged in the vertical direction between the cylindrical portion 71d of the upper case 71 and the cylindrical portion 72d of the lower case 72. Accordingly, the vehicle weight is not loaded on the slide bush 75, and the slide bush 75 is in sliding contact with the cylindrical portion 71d of the upper case 71, so that predetermined damping can be generated to swinging of the lower case 72 in the turning direction.

The slide bush 75 is accommodated in an accommodating concave portion 72f of the lower case 72 and is formed in a cylindrical shape with a thickness which is in sliding contact with the cylindrical portion 71d of the facing upper case 71.

A material of the slide bush 75 may be any material having wear resistance and a predetermined damping characteristic and is not particularly limited. However, for example, a resin material such as Teflon (registered trademark) or the like may be used.

In the bearing unit of the second embodiment, a seal 66 is provided in order to prevent the entry of foreign matters from the outside of the bearing unit. For the seal 66, for example, known elastic materials such as rubber and elastomer or the like are appropriately selected and adopted within the scope of the present invention.

The stopper ring 49 is adopted so as to improve the mounting operability to the suspension device. In the second embodiment, the stopper ring 49 has an annular mounting portion 49a having a circle ring shape of which an outer diameter is the same as the top plate 7 and an inner diameter is slightly greater than the flange portion 43b of the first piston 43 and the flange portion 44d of the second piston 44, a cylindrical portion 49b extending downward in the vertical direction toward the lower side from the inner diameter of the annular mounting portion 49a, and an engaging collar portion 49c protruding inward in the horizontal direction from a lower end of the cylindrical portion 49b and having a diameter slightly larger than the large diameter annular portion 71a of the upper case 71 of the bearing unit 50.

The annular mounting portion 49a is formed with bolt fixing holes 49d arranged coaxially in the vertical direction with the bolt fixing holes 7h of the top plate 7.

Therefore, when the bolt insertion holes 49d of the stopper ring 49 are arranged to coaxially communicate with the bolt fixing holes 7h of the top plate 7, which are then fastened with the coupling bolt 17, the engaging collar portion 49c is engaged with the flange portion 44d of the second piston 44 so as to receive the same from below in the vertical direction, so that the first piston 43 and the second piston 44 can be integrated with the top plate 7 so as to be movable in the vertical direction within a range of the gap P (a gap P between the upper surface 43f of the cylindrical portion 43a of the first piston 43 and the diaphragm 11, and a gap P between the upper surface 43m of the flange portion 43b of the first piston 43 and the lower surface 35c of the collar 35).

In the second embodiment, the relative-rotation preventing structure 80 includes a protrusion 80a provided on the stopper ring 49 fixed by bolts to the top plate 7 fixed to the vehicle body side, and flat surface portions 80b, 80c provided on the pistons (first piston 43 and second piston 44) which are pressed in the vertical direction by the elasticity of the spring.

The protrusion 80a is a protruding body having a substantially rectangular shape in a cross-sectional view and protruding in a radial direction at a predetermined position on the inner peripheral surface of the stopper ring 49 (see FIGS. 8 to 10).

The flat surface portions 80b, 80c are formed by cutting out a predetermined area in a flat surface shape in the circumferential direction at the same position in the vertical direction of the outer peripheral surface of the flange portion 43b of the first piston 43 and the outer peripheral surface of the flange portion 44d of the second piston 44 (see FIGS. 8 to 10).

The protrusion 80a has a thickness in the vertical direction so as to be in contact with the flat surface portions 80b, 80c, and protrudes with a slight gap P2 with the flat surface portions 80b, 80c in the radial direction. That is, even if the first piston 43 and the second piston 44 tend to rotate, the relative rotation is prevented since the protrusion 80a is in contact with the flat surface portions 80b, 80c.

Therefore, according to the second embodiment, the protrusion 80a provided on the stopper ring 49 is in contact with the flat surface portions 80b, 80c provided on the first piston 43 and the second piston 44, so that the relative rotation of the stopper ring 49 with respect to the first piston 43 and the second piston 44 can be prevented. Therefore, the wear of the pad 45 arranged in the upper groove portion 43h of the first piston 43 and the diaphragm 11 arranged between the collar 35 and the top plate 7 is prevented.

The relative-rotation preventing structure 80 configured by the protrusion 80a and the flat surface portions 80b, 80c according to the second embodiment is not limited to one set as in the present embodiment, but may be provided in a plurality of sets and can be appropriately modified within the scope of the present invention. Also, the shape of the protrusion is arbitral.

The relative-rotation preventing structure 80 according to the second embodiment can be applied to the first embodiment within the scope of the present invention, and can be appropriately modified within the scope of the present invention.

### Third Embodiment

FIGS. 11 to 13 illustrate a third embodiment of the present invention.

The third embodiment is different from the second embodiment in the relative-rotation preventing structure 80. Since other configurations and effects are the same as the second embodiment, the detail descriptions thereof are omitted. The bearing unit 50 is schematically shown in FIG. 11 and may have the same configuration as that of the second embodiment.

In the third embodiment, the relative-rotation preventing structure 80 includes a cutout portion 80d provided on the stopper ring 49, and protrusions 80e, 80f provided on the first piston 43 and the second piston 44.

The cutout portion 80d is formed in a circular arc shape in the plan view radially outward at a predetermined position on an inner peripheral surface of the stopper ring 49 and is continuously recessed in the vertical direction in a penetrating manner (see FIGS. 11 to 13).

The protrusions 80e, 80f are circular arc-shaped protruding bodies which protrude in the radial direction in a curved shape at the same position in the vertical direction of the outer peripheral surface of the flange portion 43b of the first piston 43 and the outer peripheral surface of the flange portion 44d of the second piston 44 respectively, and are formed in a size such that they can engaged with the cutout portion 80d with a slight gap P3 (see FIGS. 11 to 13). That is, the protrusions 80e, 80f are formed such that the movement of the first piston 43 and the second piston 44 in the vertical direction is not disturbed.

Therefore, according to the third embodiment, the protrusions 80e, 80f provided on the first piston 43 and the second piston 44 are engaged in the cutout portion 80d provided on the stopper ring 49, and the relative rotation of the stopper ring 49 with respect to the first piston 43 and the second piston 44 can be prevented. According to such a configuration, the wear of the pad 45 arranged in the upper groove portion 43h of the first piston 43 and the diaphragm 11 arranged between the collar 35 and the top plate 7 is prevented.

The relative-rotation preventing structure 80 configured by the cutout portion 80d and the protrusions 80e, 80f according to the third embodiment is not limited to one set as in the present embodiment, but may be provided in a plurality of sets and can be appropriately modified within the scope of the present invention.

The relative-rotation preventing structure 80 according to the third embodiment can be applied to the first embodiment within the scope of the present invention, and can be modified within the scope of the present invention as appropriate.

### Fourth Embodiment

FIGS. 14 to 16 illustrate a fourth embodiment of the present invention.

In the fourth embodiment, the groove portion 202 configuring the oil chamber 201 of the vehicle weight measurement device described in the first embodiment has a characteristic configuration different from the groove portion 202 of the first embodiment. Since other configurations and effects are the same as the first embodiment, the detail descriptions thereof are omitted.

In the fourth embodiment, a port 500 for supplying oil is inserted into the sensor coupling hole portion 206d so as to fill the oil chamber 201 with the measurement fluid (oil) R as shown in the drawings, and the pressure sensor 400 is omitted in the drawings.

The port 500 includes a supply portion 501 which can be inserted into the sensor coupling hole portion 206d, an oil injection portion 503 extending in the horizontal direction and in communication with the supply portion 501, and an exhaust port 505 integrally provided in the upper side in the vertical direction and in communication with the supply portion 501 and the oil injection portion 503 (see FIG. 14 to 16).

The port 500 is not limited to the illustrated example, and an appropriate port can be adopted within the scope of the present invention.

In the vehicle weight measurement device of the present invention, the measurement fluid (oil) R is preferably filled into the oil chamber 201 from the sensor coupling hole portion 206d to which the pressure sensor 400 is attached via the port 500 for supplying oil at the time of manufacture. The reason is that if a hole for oil filling is separately provided, the measurement fluid (oil) R may flow out from the hole, and it is not preferable to increase the number of holes.

For example, when filling oil from one hole, if the measurement fluid (oil) R blocks an air passage, air bubbles will be generated in the oil chamber. Therefore, air needs to be properly exhausted until the measurement fluid (oil) R is fully filled in the oil chamber.

However, if the oil chamber is narrow, the air passage may be blocked near an inlet before the measurement fluid (oil) R fully fills the oil chamber and air is trapped in the oil chamber, so that large air bubbles are generated. In order to fill the measurement fluid (oil) R without air bubbles, it is necessary to secure the air passage for air to escape (exhaust) outward until the measurement fluid (oil) fully fills the oil chamber.

Accordingly, in the fourth embodiment, in order to achieve such an object, not only the inside of the groove portion is simply widened, but also the air in the oil chamber can be efficiently exhausted.

In the fourth embodiment, an inner bottom surface 202b of the groove portion 202 forming the oil chamber 201 is formed in a tapered shape in which the height in the groove gradually decreases from a communication position (oil filling port) 206e of the sensor coupling hole portion 206d (see FIGS. 14 to 16).

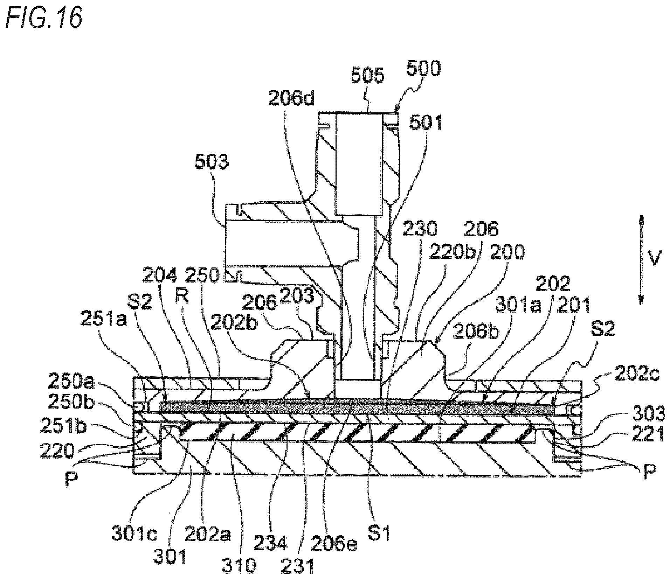

That is, the groove portion 202 configuring the oil chamber 201 in the fourth embodiment has the inner bottom surface 202b in a tapered shape such that the groove in the vicinity of the communication position (oil filling port) 206e is the deepest and the groove gradually becomes shallow toward a maximum outer diameter portion (an end in the groove portion) 202c of the groove portion 202 (see FIG. 16). A groove space near the communication position (oil filling port) 206e is S1, and a groove space near the maximum outer diameter portion (the end in the groove portion) 202c is S2 (see FIG. 16).

Therefore, according to such a groove portion structure, an oil chamber structure can be adopted in which the space (S1) near the communication position (oil filling port) 206e is wide and the space (S2) becomes narrower as a distance from the communication position (oil filling port) 206e is increased, so that when the measurement fluid (oil) R is supplied into the oil chamber 201 from the oil injection portion 503 through the port 500, the end of the oil chamber 201 (maximum diameter portion 202c) is first filled with the measurement fluid (oil) R, and the air remaining in the oil chamber 201 can be guided to the port 500 through the tapered inner bottom surface 202b and exhausted via the exhaust port 505 until the oil chamber 201 is fully filled with the measurement fluid (oil) R. Therefore, the air passage is not blocked when supplying the measurement fluid (oil) R.

Accordingly, since the air in the oil chamber 201 can be exhausted completely, the measurement fluid (oil) R can be filled in the oil chamber 201 without air bubbles.

An angle of inclination for the inner bottom surface 202b of the groove portion 202 is not particularly limited and can be modified within the scope of the present invention.

The groove portion structure according to the fourth embodiment can be applied to the second embodiment and the third embodiment within the scope of the present invention, and can be appropriately modified within the scope of the present invention.

### Fifth Embodiment

FIGS. 17 and 18 illustrate a fifth embodiment of the present invention.

The fifth embodiment is another embodiment for achieving the effect described in the fourth embodiment, in which radial concave grooves 202d are formed on the inner bottom surface 202b of the groove portion 202 configuring the oil chamber 201 of the vehicle weight measurement device.

Since other configurations and effects are the same as the first embodiment and the fourth embodiment, the detail descriptions thereof are omitted.

The radial concave grooves 202d are formed on the inner bottom surface 202b of the groove portion 202 as continuous concave grooves extending radially from the communication position (oil filling port) 206e of the sensor coupling hole portion 206d (see FIG. 18).

In the fifth embodiment, six concave grooves having the same shape are formed radially from the communication position evenly on the inner bottom surface 202b of the groove portion 202 (see FIG. 18).

In the fifth embodiment, the radial concave grooves 202d are formed with the same width continuously from a common concave groove area 202e provided around the communication position (oil filling port) 206e to the maximum outer diameter portion (the end in the groove portion) 202c of the groove portion 202, respectively (see FIG. 18).

The radial concave grooves 202d may be formed directly from the communication position (oil filling port) 206e without providing the common concave groove area 202e.

Therefore, the radial concave grooves 202d serve as air passages, so that the measurement fluid (oil) R can be filled in the oil chamber 201 without air bubbles.

The shape and number of the radial concave grooves 202d are not limited to those shown in the drawings, and any grooves may be used as long as they communicate from the communication position (oil filling port) 206e to the maximum outer diameter portion (the end in the groove portion) 202c of the groove portion 202. In addition, radial concave grooves 202d with non-uniform widths or lengths are within the scope of the present invention.

The radial concave grooves 202d of the fifth embodiment can be tapered as described in the fourth embodiment.

The groove portion structure according to the fifth embodiment can be applied to the second embodiment and the third embodiment within the scope of the present invention, and can be appropriately modified within the scope of the present invention.

### Industrial Applicability

The present invention also be applied to suspension devices having the other configurations, in addition to the suspension device having the configurations described in the embodiments.

The present application is based on a Japanese Patent Application No. 2016-128657 filed on June 29, 2016, and a Japanese Patent Application No. 2017-124116 filed on June 26, 2017, the contents of which are incorporated herein by reference.

### Description of Reference Numerals

- 1: suspension device
- 2: arm
- 5: coil spring (spring)
- 7: top plate (sensor body)
- 7d, 206: sensor coupling portion
- 7f: sensor coupling hole portion
- 9, 201: oil chamber
- 11, 230: diaphragm
- 21, 400: pressure sensor
- 35, 220: collar
- 44: second piston (moving body)
- 49, 320: stopper ring
- 80: relative-rotation preventing structure
- 80a, 80e, 80f: protrusion
- 80b, 80c: flat surface portion
- 80d: cutout portion
- 100: vehicle weight measurement device
- 200: bottom plate (sensor body)
- 202: groove portion
- 202a: opening area
- 202d: radial concave groove
- 203: lower surface
- 204: upper surface
- 205: annular wall portion
- 205b: protruding portion
- 207: step portion of bottom plate
- 221: annular inner surface
- 222: lower surface
- 223: upper surface
- 231: diaphragm accommodating concave portion
- 232: inner surface portion
- 234: pressing area
- 300: piston (moving body)
- 301: cylindrical portion
- 301a: lower surface of cylindrical portion
- 301b: upper surface of cylindrical portion
- 301c: lower groove portion
- 301d: spring seat fitting cylindrical portion
- 302: flange portion
- 304: hanging circumferential edge portion (edge)
- 304a: lower surface of hanging circumferential edge portion
- 320a: lower side of stopper ring
- 322: cutout
- 404: sensor main body
- P: predetermined gap
- R: measurement fluid (operating oil)

## Claims

1. A vehicle weight measurement device comprising:
a sensor body having a groove portion of a predetermined shape and mounted to a vehicle body side or an arm side of a suspension device;
a moving body configured to be moved by a resilient force of a spring;
a diaphragm configured to be pressed and deformed by movement of the moving body;
an oil chamber configured by the groove portion of the sensor body and the diaphragm and filled with a predetermined measurement fluid, wherein an internal pressure of the oil chamber is changeable by pressing the diaphragm; and
a pressure sensor provided in the sensor body and configured to detect a change in pressure in the oil chamber,
wherein a relative-rotation preventing structure is provided on the sensor body and the moving body, so as to prevent a relative rotation between the sensor body and the moving body.

2. The vehicle weight measurement device according to claim 1,
wherein a stopper ring is fixed to either one of the sensor body and the moving body, and
wherein the relative-rotation preventing structure is provided between (i) the moving body or the sensor body and (ii) the stopper ring.

3. The vehicle weight measurement device according to claim 2,
wherein the stopper ring is fixed to the sensor body, and
wherein the relative-rotation preventing structure includes:
a protrusion provided on the stopper ring; and
a flat surface portion provided on the moving body at a position facing the protrusion.

4. The vehicle weight measurement device according to claim 2,
wherein the stopper ring is fixed to the sensor body, and
wherein the relative-rotation preventing structure includes:
a cutout portion provided on the stopper ring; and
a protrusion provided on the moving body to be engaged in the cutout portion.

5. A vehicle weight measurement device comprising:
a top plate having an upper surface side mounted to a vehicle body side and a lower surface side provided with an opening groove portion;
a diaphragm configured to cover an opening area of the groove portion to form an oil chamber of a predetermined space together with the groove portion, wherein a predetermined measurement fluid is filled in the oil chamber;
an annular collar having a diameter larger than an outer diameter of the opening area of the groove portion and configured to sandwich and tightly fix an outer diameter side surface portion of the diaphragm between the collar and a surface portion outside the opening area of the groove portion;
a piston provided to be moveable on an inner diameter side of the collar, arranged on an upper side of the collar with a gap interposed therebetween, and configured to press the diaphragm by a resilient force of a spring of a suspension device; and
a pressure sensor provided on the top plate and configured to detect a change in pressure of the measurement fluid in the oil chamber which is changeable by movement of the piston,
wherein a stopper ring is fixed to the top plate, and
wherein a relative-rotation preventing structure is provided on the stopper ring and the piston so as to prevent a relative rotation between the stopper ring and the piston.

6. A vehicle weight measurement device comprising:
a bottom plate having a lower surface side in contact with an arm of a suspension device and an upper surface side provided with an opening groove portion;
a diaphragm configured to cover an opening area of the groove portion and to form an oil chamber of a predetermined space together with the groove portion, wherein a predetermined measurement fluid is filled in the oil chamber;
an annular collar having a diameter larger than an outer diameter of the opening area of the groove portion and configured to sandwich and tightly fix an outer diameter side surface portion of the diaphragm between the collar and a surface portion outside the opening area of the groove portion;
a piston provided to be moveable in a longitudinal direction of the suspension device on an inner diameter side of the collar, arranged on an upper side of the collar with a gap interposed therebetween, and configured to press the diaphragm by a resilient force of a spring of the suspension device; and
a pressure sensor provided on a lower surface side of the bottom plate and configured to detect a change in pressure of the measurement fluid in the oil chamber which is changeable by movement of the piston,
wherein a rotation-preventing mechanism configured to engage with the arm of the suspension device is integrally provided in at least a part of the lower surface side of the bottom plate,
wherein a protruding portion is provided on each of the bottom plate and the piston,
wherein an annular stopper ring is fixed to the piston, and
wherein the stopper ring has at least one cutout in a circumferential direction to which both the protruding portion of the bottom plate and the protruding portion of the piston are engaged, such that the bottom plate is held together with the piston in a non-rotatable manner.

7. The vehicle weight measurement device according to claim 6,
wherein the stopper ring is configured such that the bottom plate and the piston are not disassembled.

8. The vehicle weight measurement device according to any one of claims 1 to 7,
wherein the sensor body includes a sensor coupling portion configured to be coupled with the pressure sensor, the sensor coupling portion including a sensor coupling hole portion in communication with the groove portion, and
wherein an inner bottom surface of the groove portion is formed in a tapered shape in which a groove height gradually decreases from a groove communication position of the sensor coupling hole portion.

9. The vehicle weight measurement device according to any one of claims 1 to 7,
wherein the sensor body includes a sensor coupling portion configured to be coupled with the pressure sensor, the sensor coupling portion including a sensor coupling hole portion in communication with the groove portion, and
wherein an inner bottom surface of the groove portion is formed with a radial concave groove extending radially from a groove communication position of the sensor coupling hole portion.
